Europäisches Patentamt

European Patent Office

Office européen des brevets

(11) Veröffentlichungsnummer: **0 244 820 B1**

# EUROPÄISCHE PATENTSCHRIFT

(45) Veröffentlichungstag der Patentschrift: **16.09.92**

(21) Anmeldenummer: **87106488.7**

(22) Anmeldetag: **05.05.87**

(51) Int. Cl.⁵: **F26B 3/08**, B01J 8/26

(54) **Vorrichtung zur Vorwärmung und gegebenenfalls Trocknung feinkörniger Feststoffe.**

(30) Priorität: **09.05.86 DE 3615624**

(43) Veröffentlichungstag der Anmeldung:
**11.11.87 Patentblatt 87/46**

(45) Bekanntmachung des Hinweises auf die
Patenterteilung:
**16.09.92 Patentblatt 92/38**

(84) Benannte Vertragsstaaten:
**DE FR GB IT NL**

(56) Entgegenhaltungen:
**DE-A- 3 118 931**
**FR-A- 2 325 004**
**GB-A- 2 052 708**
**US-A- 4 111 158**

**ESCHER WYSS MITTEILUNGEN, Band 52, Nr.**
**2/1, Februar 1978/Januar 1979, Seiten 31-37,**
**Escher Wyss AG, CH; G. FLORIN et al.:**
**"Fliessbettechnik zur wirtschaftlichen Lö-**
**sung von Trocknungs- und Kühlproblemen"**

(73) Patentinhaber: **METALLGESELLSCHAFT AG**
**Reuterweg 14 Postfach 3724**
**W-6000 Frankfurt/M.1(DE)**

Patentinhaber: **VEREINIGTE ALUMINIUM-**
**WERKE AKTIENGESELLSCHAFT**
**Berlin - Bonn Postfach 2468 Georg-**
**von-Boeselager-Strasse 25**
**W-5300 Bonn 1(DE)**

(72) Erfinder: **Stockhausen, Werner**
**An der Bleiche 4**
**W-6368 Bad Vibel 3(DE)**

(74) Vertreter: **Rieger, Harald, Dr.**
**Reuterweg 14**
**W-6000 Frankfurt a.M.(DE)**

## Beschreibung

Die Erfindung betrifft eine Vorrichtung zur Vorwärmung und ggf. Trocknung von feinkörnigem Feststoff mit einer mit Feststoffeintragsvorrichtung versehenen pneumatischen Förderstrecke und nachgeschaltetem Abscheider.

Im Zusammenhang mit der Durchführung endothermer Prozesse ist es üblich, die Abgase des eigentlichen Prozesses zur Vorwärmung und ggf. Vorentwässerung des frischen Aufgabegutes zu verwenden. Für den Kontakt zwischen frischem Aufgabegut und Prozeßabgas sind in der Regel Schwebe- bzw. Venturiaustauscher, die häufig in Kaskadenbauweise angeordnet sind, gebräuchlich (DE-AS 17 67 628, DE-OS 25 24 540).

Obgleich diese Form der Vorwärmung bzw. Ausnutzung der Prozeßabgase von Vorteil ist, treten Probleme dann auf, wenn das Aufgabegut von vornherein oder während des Trockenprozesses zu Anbackungen neigt. Dieses Problem verstärkt sich im allgemeinen, wenn die Abgasmenge und damit -wärme zur erforderlichen Vorwärmung durch direkten Gas/Feststoff-Kontakt nicht ausreicht und demzufolge eine zusätzliche Vorwärmung z.B. durch indirekten Wärmeaustausch mit in den Trockner installierten Heizflächen erforderlich ist. In diesen Fällen kann es zu völligen Verbackungen der Heizflächen kommen mit der Folge, daß der Wärmeübergang auf einen Bruchteil des an sich erforderlichen Wertes zurückgeht. Es verbleibt dann nur die Möglichkeit der Stillsetzung und gründlichen Reinigung der Vorrichtung.

Aus Escher Wyss Mitteilungen, Band 52, Nr. 2/1 Febr. 1978/Jan. 1979, Seiten 31-37, G. Florin et al. "Fließbettechnik zur wirtschaftlichen Lösung von Trocknungs- und Kühlproblemen", insbesondere Seite 36, ist es bekannt, zur Trocknung von Protein das zunächst als Paste oder Suspension anfallende Produkt mit Trockenprodukt zu mischen und zu granulieren. Dabei wird die Mischfeuchte derart gewählt, daß eine leichte Fluidisierung in einem Wärmetauscher-Fließbett ohne Verbackung der Wärmetauscherrohre gewährleistet ist. Nach Trocknung des Endproduktes wurden Über- und Unterkorn durch Sieben abgetrennt und in den Prozeß zurückgeführt.

Bei dem vorgenannten Verfahren erfolgt das Vermischen des frischen Aufgabegutes in einem als Schneckenförderer ausgebildeten Mischer, so daß die Bildung kompakter Agglomerate, die in einem späteren, für das Endprodukt vorgesehenen Siebvorgang wieder abgetrennt und rückgeführt werden müssen, unvermeidlich ist.

Aufgabe der Erfindung ist es, eine Vorrichtung zur Vorwärmung und ggf. Trocknung von feinkörnigem Feststoff bereitzustellen, die die bekannten, insbesondere vorgenannten Nachteile nicht aufweist und bei apparatemäßig niedrigem Aufwand eine über einen Langzeitraum einwandfreie Betriebsweise gestattet.

Die Aufgabe wird gelöst, indem bei der Vorrichtung der eingangs genannten Art entsprechend der Erfindung mindestens eine fluidisierte Aufheizkammer, die von abgeschiedenem Feststoff durchflossen wird und in die mindestens eine, von einem Wärmeträgermedium durchflossene Heizfläche eintaucht, sowie eine Rückführleitung von der vom Feststoff durchflossenen Aufheizkammer in die Förderstrecke und eine Entnahmevorrichtung für Feststoffe an einem zwischen Abscheider und Förderstrecke liegenden Aggregat vorgesehen sind.

Die vorstehend definierte Vorrichtung besitzt den Vorzug, daß das frische Aufgabegut mit dem über die pneumatische Förderstrecke, den nachgeschalteten Abscheider und die fluidisierten Aufheizkammern fließenden, bereits vorgewärmten und ggf. getrockneten oder vorgetrockneten Feststoff praktisch augenblicklich vermischt wird. Durch diese Vermischung verliert das frische Gut seine Neigung zur Ansatzbildung und wird quasi in einem Hilfsbett aus arteigenem Produkt vorgewärmt und ggf. getrocknet bzw. vorgetrocknet.

Besonders vorteilhaft ist es eine Vorrichtung einzusetzen, die mehrere vom Feststoff nacheinander durchflossene Aufheizkammern und im Gegenstrom hierzu vom Wärmeträgermedium durchflossene, in den einzelnen Aufheizkammern befindliche Heizflächen sowie eine Rückführleitung von der vom Feststoff durchflossenen letzten Aufheizkammer in die Förderstrecke besitzt. Hierbei können die Aufheizkammern eine bauliche Einheit bilden, d.h. lediglich durch Trennwände voneinander separiert sein. Durch - in Fließrichtung des Feststoffes gesehen - abnehmende Höhe der Trennwände kann eine Rückvermischung des Feststoffes vermieden werden. Die einzelnen Aufheizkammern können jedoch auch ein separates Element bilden.

Die Förderung in der pneumatischen Förderstrecke kann mit kaltem oder auf beliebige Weise vorgewärmtem Gas erfolgen. Beispielsweise kann auch Abgas aus einem nachgeschalteten Prozeß zur thermischen Behandlung des vorgewärmten Feststoffes eingesetzt werden. Besonders zweckmäßig ist es, in der erfindungsgemäßen Vorrichtung selbst anfallendes Abgas zur Förderung zu nutzen.

Demzufolge sieht eine bevorzugte Ausgestaltung vor, die Vorrichtung mit einer die Abgase der fluidisierten Aufheizkammern 7,8,9 aufnehmenden, zum unteren Bereich der Förderstrecke 4 führenden Rohrleitung 16 auszustatten. Hierdurch wird der Wärmeinhalt der die Aufheizkammern verlassenden Abgase zur Gutaufheizung in der Förderstrecke genutzt.

Die den Aufheizkammern vermittels des Wärmeträgermediums zugeführte Energie kann beliebiger Herkunft sein. Sie kann beispielsweise durch Brenner in einer Verbrennungskammer erzeugt worden sein. Sie kann auch durch das Endprodukt der thermischen Behandlung in einem Produktkühler eingebracht werden.

Das Wärmeträgermedium wird zweckmäßigerweise in einem geschlossenen Kreislauf über die Aufheizkammern der erfindungsgemäßen Vorrichtung und eine geeignete Vorrichtung zur Wiederaufheizung geführt. Es kann beispielsweise aus Druckwasser oder einem hochsiedenden organischen Lösungsmittel, ggf. auch aus einer Salzschmelze oder einer hochsiedenden Lösung bestehen. Selbstverständlich sind auch andere von Wasser verschiedene und unter Druck gehaltene Flüssigkeiten verwendbar.

Der Grad der Vorwärmung ggf. mit Trocknung bzw. Vortrocknung bestimmt sich nach der Beschaffenheit des frischen Aufgabegutes und/oder den Gegebenheiten eines sich evtl. anschließenden Folgeprozesses. Im allgemeinen wird man eine Vorwärmung auf etwa 100 bis 200°C vorsehen.

Die erfindungsgemäße Vorrichtung ist insbesondere mit Vorteil zur Vorwärmung und Trocknung von Ausgangsstoffen geeignet, die aufgrund hohen Feuchtigkeitsgehaltes und/oder klebender Materialeigenschaften im Ausgangszustand bei direktem Kontakt mit Heizflächen zu Ansätzen führen würden. Ein typischer Anwendungsfall ist das Vorwärmen und Trocknen von filterfeuchtem Aluminiumhydroxid.

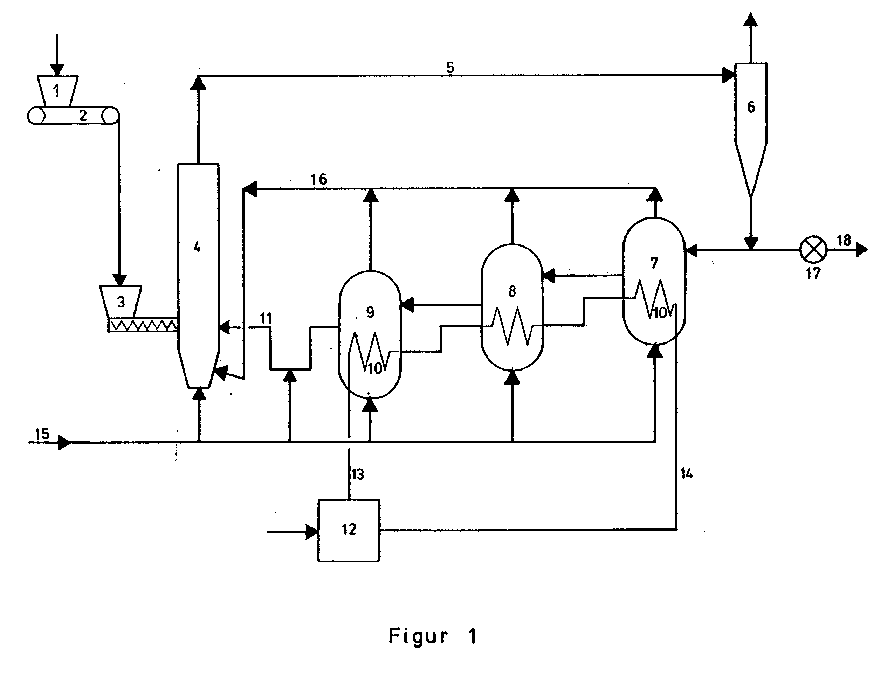

Die Erfindung wird anhand der Figur und des Beispiels näher und beispielsweise erläutert.

Die Figur veranschaulicht die erfindungsgemäße Vorrichtung in bevorzugter Ausgestaltung und schematischer Darstellung mit drei Aufheizkammern.

Das in der Regel feuchte Aufgabegut wird aus dem Vorratsbunker 1 mittels einer Dosiervorrichtung (2) abgezogen und zur Eintragsschnecke (3) geleitet, welche es in die Förderstrecke (4) einträgt. Die aus der Förderstrecke (4) oben ausgetragene Gas/Feststoff-Suspension wird über Leitung (5) zum Abscheidezyklon (6) geführt und dort in Gas und Feststoff getrennt. Die Förderluft wird entweder in einem separaten Entstaubungsaggregat gereinigt oder in einem vorhandenen Entstaubungsaggregat gemeinsam mit anderen Abgasen gereinigt.

Der im Abscheidezyklon (6) abgeschiedene Feststoff wird zum größten Teil der ersten der drei in Serie geschalteten fluidisierten Aufheizkammern (7,8,9) zugeführt und im indirekten Wärmeaustausch mittels eingebauter Heizflächen (10), die von einem in einer Brennkammer (12) erwärmten Wärmeträgermedium durchflossen werden, erwärmt. Mit (13) ist die Leitung zur Zuführung und mit (14) die Leitung zur Abführung des Wärmeträgermediums bezeichnet. Nach Durchgang des Feststoffes durch die Heizkammern (7,8,9) erfolgt seine Rückführung über Leitung 11 in die Förderstrecke (4).

Das Medium zur Fluidisierung der Heizkammern (7,8,9) und zur pneumatischen Förderung des frischen Aufgabegutes wird über Leitung (15) herangeführt. Die Abgase der fluidisierten Heizkammern (7,8,9) werden über Leitung (16) als zusätzliches Fördermedium in die Förderstrecke (4) eingetragen.

Der Teil des im Abscheidezyklon (6) abgeschiedenen Feststoffes, der dem über die Eintragsschnecke (3) eingetragenen frischen Aufgabegutes entspricht, wird über die Zellenradschleuse (17) und Leitung (18) ausgetragen und ggf. einer weiteren Behandlung, z.B. in einer nachgeschalteten Kalzinieranlage, zugeführt.

Beispiel

Aus dem Vorratsbunker (1) werden mittels der Dosiervorrichtung (2) und der Eintragsschnecke (3) stündlich 42,5 t filterfeuchtes Aluminiumhydroxid mit einer Feuchte von 10 Gew.-% der Förderstrecke (4) aufgegeben. Die Förderstrecke (4) wird mit 3000 $Nm^3$/h Luft und mit 9000 $Nm^3$/h der zu gleichen Teilen aus den Aufheizkammern (7,8,9) stammenden Abgase (Leitung 16) beaufschlagt. In ihr tritt eine praktisch augenblickliche Vermischung des feuchten Aluminiumhydroxids mit dem teilentwässerten und auf 150°C vorgewärmten Aluminiumhydroxid, das über Leitung (11) herangeführt wird, ein. Nach der Abscheidung im Abscheidezyklon (6) wird ein Aluminiumhydroxid erhalten, dessen Temperatur 100°C beträgt.

Der der Eintragsmenge entsprechende Anteil von 38,3 t/h wird über Zellenradschleuse (17) und Leitung (18) mit einer Temperatur von 100°C abgezogen. Der verbleibende Anteil wird der ersten Heizkammer (7) und dann den folgenden Heizkammern (8,9) zugeführt. In diesen Heizkammern erfolgt eine stufenweise Aufheizung auf eine Temperatur von 140°C, mit der der im Kreislauf geführte Feststoff mittels der Leitung (11) wieder der Förderstrecke (4) zugeleitet wird.

Als Wärmeträgermedium dient Druckwasser von 200°C, das in der Brennkammer (12) durch Verbrennung von 285 kg/h schwerem Heizöl ($H_u$ = 40 900 kJ/kg) in einer Menge von 84 t/h erzeugt und - in Richtung des Feststoffflusses gesehen - der letzten Heizkammer (9) zugeleitet wird. Nach Durchgang durch die Heizkammer (9,8,7) hat sich das Druckwasser auf 170°C abgekühlt.

**Patentansprüche**

1. Vorrichtung zur Vorwärmung und ggf. Trocknung von feinkörnigem Feststoff mit einer mit Feststoffeintragsvorrichtung versehenen pneumatischen Förderstrecke (4) und nachgeschaltetem Abscheider (6), wobei mindestens eine fluidisierte Aufheizkammer (7,8,9), die von abgeschiedenem Feststoff durchflossen wird und in die mindestens eine, von einem Wärmeträgermedium durchflossene Heizfläche (10) eintaucht, sowie eine Rückführleitung (11) von der vom Feststoff durchflossenen Aufheizkammer (9) in die Förderstrecke (4) und eine Entnahmevorrichtung (17,18) für Feststoffe an einem zwischen Abscheider (6) und Förderstrecke (4) liegenden Aggregat vorgesehen sind.

2. Vorrichtung nach Anspruch 1, gekennzeichnet durch mehrere vom Feststoff nacheinander durchflossene Aufheizkammern (7,8,9) und im Gegenstrom hierzu vom Wärmeträgermedium durchflossene, in den einzelnen Aufheizkammern (7,8,9) befindliche Heizflächen (10) sowie eine Rückführleitung (11) von der vom Feststoff durchflossenen letzten Aufheizkammer (9) in die Förderstrecke (4).

3. Vorrichtung nach Anspruch 1 oder 2, gekennzeichnet durch eine die Abgase der Aufheizkammern (7,8,9) aufnehmende, zum unteren Bereich der Förderstrecke (4) führende Rohrleitung (16).

## Claims

1. An apparatus for preheating and optionally drying fine-grained solids, comprising a pneumatic conveyor line (4) provided with a solids introduction means, and a subsequent separator (5), in which at least one fluidised heating chamber (7, 8, 9) through which separated solids flow and into which extends at least one heating surface (10) through which a heat transfer medium flows, and also a recycling line (11) from the heating chamber (9) through which solids flow into the conveyor line (4) and a means (17, 18) for withdrawing solids are provided on a unit located between the separator (6) and conveyor line (4).

2. An apparatus according to Claim 1, characterised by a plurality of heating chambers (7, 8, 9) through which solids flow successively and heating surfaces (10) through which heat transfer medium flows in a counter-current thereto, which surfaces are located in the individual heating chambers (7, 8, 9), and also a recycling line (11) from the last heating chamber (9) through which solids flow into the conveyor line (4).

3. An apparatus according to Claim 1 or 2, characterised by a pipe (16) which receives the exhaust gases from the heating chambers (7, 8, 9) and which leads to the lower region of the conveyor line (4).

## Revendications

1. Installation de préchauffage et, le cas échéant, de séchage de matière solide à grain fin, comprenant une voie de transport (4) pneumatique munie d'un dispositif de chargement de matière solide et un séparateur (6) monté en aval, et il est prévu au moins une chambre de chauffage (7, 8, 9) fluidisée dans laquelle passe de la matière solide séparée et dans laquelle pénètre au moins une surface de chauffe (10) parcourue par un milieu caloporteur, ainsi qu'un conduit de recyclage (11) de la chambre de chauffage (9), dans laquelle passe la matière solide, à la voie de transport (4) et un dispositif de prélèvement (17, 18) de matière solide sur une unité se trouvant entre le séparateur (6) et la voie de transport (4).

2. Installation suivant la revendication 1, caractérisée par plusieurs chambres de chauffage (7, 8, 9) dans lesquelles passe successivement de la matière solide et par des surfaces de chauffe (10) parcourues à contre-courant par un milieu caloporteur et se trouvant dans les diverses chambres de chauffage (7, 8, 9), ainsi que par un conduit de recyclage (11) de la dernière chambre de chauffage (9), dans laquelle passe de la matière solide, à la voie de transport (4).

3. Installation suivant la revendication 1 ou 2, caractérisée par un conduit (16) recevant les effluents gazeux des chambres de chauffage (7, 8, 9) et les menant à la partie inférieure de la voie de transport (4).

Figur 1